# EUROPEAN PATENT SPECIFICATION

(11) **EP 2 716 620 B1**
(45) Date of publication and mention of the grant of the patent: **06.11.2019**
(21) Application number: 13184892.1
(22) Date of filing: 18.09.2013
(51) Int. Cl.: C05G 3/00, B01J 2/20, B01J 2/22

(54) **Process and apparatus for producing fertiliser in pellet form**
Verfahren und Vorrichtung zur Herstellung von pelletformige Düngemittel
Procédé et appareil pour la production d'engrais sous forme de granules

(30) Priority: 02.10.2012 IT MI20121648
(43) Date of publication of application: 09.04.2014
(73) Proprietor: SBS Steel Belt Systems S.r.l., 20146 Milano (IT)
(72) Inventor: Calamrà, Renato, 20146, Milano (IT); Virgilio, Gianluigi, 20146, Milano (IT)
(74) Representative: Ponzellini, Gianmarco

(56) References cited:
- WO-A1-2012/007331
- WO-A2-01/89679
- WO-A2-02/089968
- BE-A- 803 102
- DE-A1-102007 061 408
- FR-A- 1 356 105

## Description

### FIELD OF THE INVENTION

The present invention refers to a process and apparatus for producing a fertilizer in pellet form to be typically used in the agricultural field for recovering untilled or abandoned farmlands or for fertilizing farmlands, and to the fertilizer in pellet form produced in this way.

### STATE OF THE ART

In the agricultural field, it is known the use of fertilizers adapted to create, reform, conserve and/or increase the fertility of farmlands, in other words adapted to correct the nutritional properties of farmlands to cultivate them with excellent or anyway very good crop yields.

It is possible to find the type of effect on the farmland based on the chemical composition of the fertilizer: for example the farmland is enriched with nutritional elements by fertilizers, the physical properties of the farmland are improved by amendments, while the farmland reactions are corrected by corrective fertilizers.

With reference to the following discussion, the fertilizers in pellet form which comprise suitable batched quantities (by weight and percentage) of fertilizing substances are of particular interest.

The use of fertilizers in pellet form enables a simple deposition and also a correct batching of the fertilizer to be distributed on the farmland so that an operator can, in dependence of the type of treatment, set the most suitable composition and deposit the fertilizer where it is required and with the suitable quantities.

The use of fertilizing pellets further enables to apply with high accuracy the fertilizer in the desired area: so that it is possible to markedly reduce the quantity of fertilizer used in comparison, for example, with a fertilization performed by liquid solutions applied by means or sprinklers.

The pellet production is done by supplying a liquid fertilizing dispersion to a pelletizer adapted to form said pellets on a conveyor belt. Then, the liquid (or semi-liquid) pellets are cooled down so that they can be supplied in a solid state ready for their use.

Examples of processes for manufacturing fertilizers in pellet form are described in the following documents: US 7700012 B2, WO 2012007331 A1, US 20070131381 A1, US 20100288005 A1. Such documents describe processes for manufacturing fertilizers in pellet form by using a fertilizing substance, known as "carrier", in a liquid state which is mixed one or more times with powdery additives. The mixture is then supplied to a pelletizer which deposits a predetermined quantity of the mixed material on a conveyor belt. The pellets in a liquid or semi-solid state are cooled down on the belt so that they can be then handled and packaged.

The above mentioned process makes use of an apparatus having a batch device dedicated to mix the carrier with various additives, and a device separate from the latter for supplying the substance once the dispersion is ready.

In other words, the fertilizer components are introduced in a mixer and then are subjected to a mild intimate mixing process for homogenizing the components; this batch process takes a few tenths of minutes based on the volumes to be prepared. During this step, the pelletizer is inoperative. Once the dispersion is ready, the same is supplied to the pelletizer for its production.

The latter process described and executed by known apparatuses has some disadvantages and limitations. Indeed, the mixing step and the following formation of pellets made of fertilizing substance occur during process steps which are temporally separated and clearly distinct one from the other.

This prolongs the overall manufacturing process with a consequent increase of the production costs.

This process, besides entailing a clear complexity of the mixer which must be heated, provided with mixing elements and a recirculation line, entails at least two serious disadvantages.

On one hand, there are, as said, the above mentioned waiting times for correctly mixing, on the other hand it is not possible to customize the production quantities, in other words all the prepared dispersion has the same composition and enables to produce a quantity determined in advance of the same fertilizer. If the production of fertilizers in different quantities or different compositions were required, more mixers having different volumetries should be used and/or a manufacturing line should be flushed for starting a different production.

Moreover, the applications providing to mill in line the granular additives and the following addition of a carrier in a smaller mixer according to some of the previously mentioned documents, do not fully solve the above mentioned disadvantages because the mills are optimized and programmed based on the substance to be milled, its granulometry and its quantity per time units.

It is clear that any variation of a composition entails to modify the plant (type of mill, distance between the milling surfaces, milling speed, etcetera), and to modify all the process parameters requiring downtime and a new setting.

In other words, the flexibility of these plants is very limited.

DE 10 2007 061408 A1 discloses a process for the production of fertilizer pellets where a liquid phase of a first component (urea melt) is mixed in batch with a second component in powder form in a warmed mixing and grinding device. In detail, the urea melt enters a first grinding and mixing unit, to which an ammonium sulfate is fed as a solid after passing a metering unit. The ammonium sulfate is in the form of granules and is initially ground in the first grinding and metering unit and then mixed with the urea melt. The mixture is then transported to a further pump via a heated discharge line to a second grinding and mixing unit. In the second grinding and mixing unit the ammonium sulfate particles are comminuted further to a particle diameter of less than 100 µm. The mixture is transported from the second grinding and mixing unit via a heated flexible tube section to the drop former where drops fall onto a cooled metal band to form the pellets.

WO 02/089968 A2 discloses a process for the production of granulates consisting of biopolymers and mineral raw materials which can be used as soil enhancers. In particular, bio-polymeric raw materials and mineral additives are mixed with a hydrophobizing agent and then processed in an extruder. The process consists in supplying liquid and/or solid biopolymer such as cereals, waste from oil extraction, wool, fibers and mineral raw materials to an extruder. The extruder comprises a screw to mix and push the products in the advancement direction and can reach up to 100°C. The latter is followed by a granulator, in which the strands emerging from the tool are cut into granules by rotating knives. The pellets are fed to a drier and finally to a silo for storage. The process can be carried out in a continuously way.

FR 1 356 105 A discloses a process for the production of granules where powder is mixed with a liquid, the mixture is then extruded and granulated.

BE 803 102 A discloses a process for the production of granules where a powder material is mixed with steam and water in a mixer where pre-granules are formed; those pre-granules are then sent to a granulator to form the granules and dried.

WO 01/89679 A2 discloses a process for the continuous processing for granulation of a liquid and a solid component where both ingredients are mixed in a twin-screw extruder. The components are mixed, moved and pushed in an advancement process direction.

### OBJECT OF THE INVENTION

Therefore it is an object of the present invention to substantially solve at least one of the disadvantages and/or limitations of the preceding approaches.

A first object of the invention is to provide a process for producing a fertilizer in pellet form, which is extremely flexible and easily enables to modify the quantities of the product and/or the composition of the pellets without requiring deep changes and/or long plant downtimes.

A further object is to provide an efficient process enabling a fast pellet production in order to enable a reduction of the product costs.

A further object of the invention is to provide a process for producing a fertilizer in pellet form enabling to correctly mix and supply the fertilizer so that each pellet substantially contains the same quantity of the fertilizing substance and has the same composition.

A fertilizer in pellet form which is at the same time economical and practical, by reducing the cost of some components and eventually improving the capabilities of homogenizing the dispersion is produced by the process according to the invention.

A fertilizing composition wherein the percentage by weight of micronutrients can be increased by reducing the number of other components without compromising the synergy among the substances forming a pellet is produced by the process according to the invention.

A further object of the invention is to provide an apparatus for producing a fertilizer in pellet form having the lowest number of components in order to make highly reliable and economical the overall productive system.

Then it is an object of the invention to provide an apparatus for producing a fertilizer in pellet form which is simple and small-sized in order to make easier its operation and maintenance.

One or more of the above described objects, which will be better understood in the following description, are substantially met by a process and apparatus for producing a fertilizer in pellet form according to one or more of the attached claims.

### BRIEF DESCRIPTION OF THE DRAWINGS

Some embodiments and aspects of the invention will be described in the following with reference to the attached drawings supplied only in an illustratively and therefore non-limiting way, wherein:
- Figure 1 schematically shows in a non-limiting way an apparatus for producing a fertilizer in pellet form according to the present invention;
- Figure 2 schematically shows a further embodiment of the apparatus for producing the fertilizer in pellet form;
- Figure 3 schematically shows in a non-limiting way a detail of the apparatus for producing a fertilizer in pellet form according to the embodiments illustrated in Figures 1 and 2.

### DETAILED DESCRIPTION

### Apparatus for producing a fertilizer in pellet form

1 generally indicates an apparatus for producing a fertilizer in pellet form useful in the agricultural, zootechnical and gardening fields, for treating farmlands.

Apparatus 1 comprises a source 4 of a carrier F which is adapted to enable to form fertilizing pellets for creating, recovering, conserving and/or increasing the fertility of a farmland, in other words to correct the nutritional properties of the farmland for cultivating it with excellent crop yields.

Generally, in the following description, it is made reference to a carrier in liquid form at the time it is supplied by a dispenser, however it is observed that the carrier F can be alternatively fed to the dispenser, as described in the following, in a solid form (for example as powder, granules or pellets) and gradually liquefied as the mixing step advances inside the dispenser.

Particularly, during the process steps, carrier F is kept at a temperature such to be in a liquid form (generally, the carrier is in a solid form at the environment temperature, that is 25°C) and comprises at least one substance selected in the group of the following substances: sulphur, urea, ammonium nitrate, paraffin, natural resin, synthetic resin or a mixture thereof.

Generally, urea-based and sulphur-based carriers (in other words substantially or prevalently consisting of urea and sulphur) are those mainly used for their chemical properties and their low cost.

To this end, it is noted that generally the substances forming the carrier are insoluble in water/moisture. Therefore, the fertilizing compositions must contain an additive such to absorb water/moisture and increase the volume in order to disgregate (by a mechanical action) at least partially the used fertilizing pellet.

In the attached figures, it is illustrated a preferred arrangement of the manufacturing plant wherein a source 4 comprises a first reservoir 11 adapted to contain the carrier F in a liquid form. From a structural point of view, first reservoir 11 comprises, in a non limiting way, a silos having a substantially cylindrical shape and extending, in an operative condition of the same, along a vertical direction. Indeed, first reservoir 11 comprises a container having a bottom wall having a circular profile, a side wall having a cylindrical shape perimetrally connected to the bottom wall, and an upper wall located at the top of the side wall.

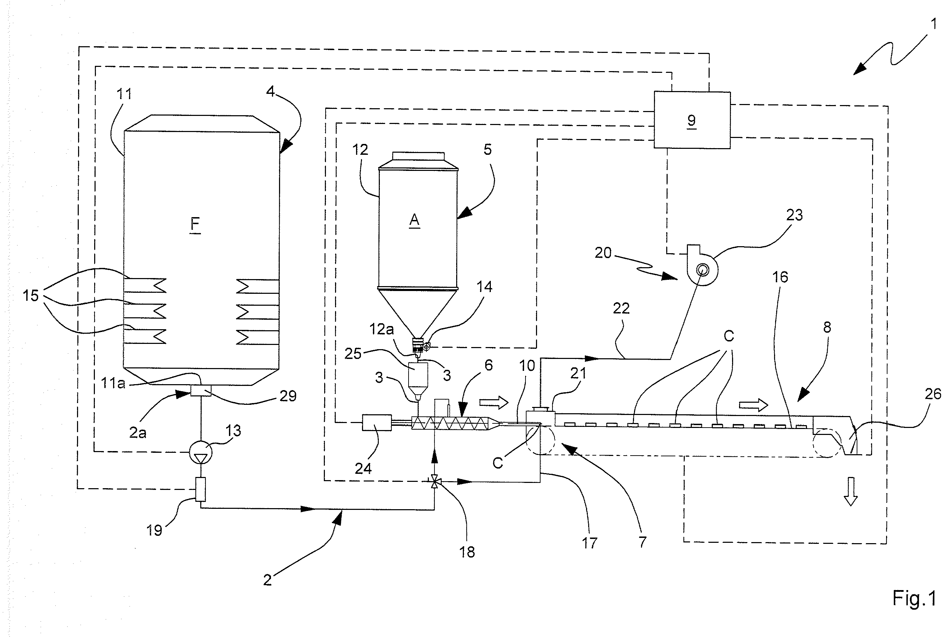

In a preferred embodiment, first reservoir 11 is provided with a heating device 15 configured to heat carrier F for keeping it at a temperature comprised between 70°C and 200°C, particularly comprised between 80°C and 180°C, still more particularly comprised between 90°C and 150°C. Indeed, the heating device 15 is configured to keep carrier F at a liquid form and enable to manage and moving it outside reservoir 11. Figure 1 represents, in a non-limiting way, an arrangement in which the heating device 15 is associated, in a non-limiting way, to the side wall of reservoir 11. Alternatively, device 15 can be associated to the bottom wall and/or upper wall of reservoir 11 (such configuration is non illustrated in the attached figures).

Naturally, carrier source 4 could consist in any other element adapted to supply a predetermined quantity of carrier in a liquid form.

As it is shown for example in Figure 1, first reservoir 11 comprises at least one exit 11a advantageously located on the bottom wall of the latter, and which is configured to enable the carrier F to exit the reservoir 11. Exit 11a is hydraulically connected to a first supply line 2: the latter being adapted to enable the carrier F to be withdrawn from the first reservoir 11 and to discharge the same inside a dispenser 6 (dispenser 6 will be better described in the following).

More particularly, supply line 2 extends from an inlet 2a at which there is a connector 29 adapted to enable the hydraulic coupling of the first supply line 2 to the first reservoir 11, particularly the exit 11a of the first reservoir 11 to the inlet 2a of the first supply line 2.

As it is shown for example in Figure 1, the first supply line 2 is provided with at least one pump 13, for example a geared pump, configured to enable to withdraw the carrier F from the first reservoir 11 and send the same to the dispenser 6. In the attached figures, it is shown a preferred condition of apparatus 1 comprising, in a non-limiting way, a volumetric meter 19 operative on the first supply line 2: the meter 19 enabling to monitor the flow rate (quantity) of carrier F exiting from the first reservoir 11 and flowing through the first supply line 2. As it is shown in the attached figures, the volumetric meter 19 is positioned, in a non-limiting way, downstream the pump 13; however there is the possibility of positioning (or omitting) the volumetric meter 19 upstream the pump 13.

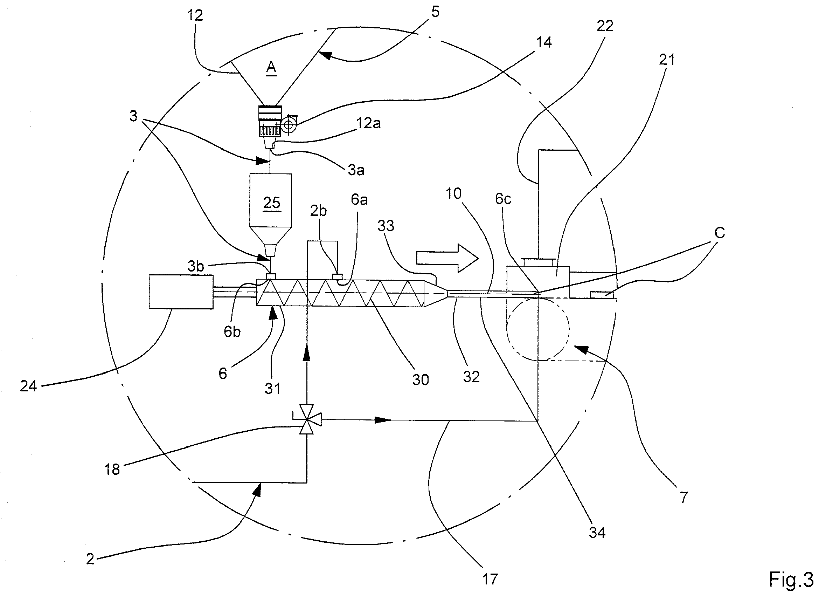

As it is clearly shown by means of the diagram of Figure 3, the first supply line 2 further comprises an exit 2b hydraulically connected to the dispenser 6 and which enables to introduce into the latter the liquid carrier F coming from the first reservoir 11.

Before describing the dispenser 6, it is useful to note that the apparatus 1 further comprises at least one further source 5 of at least one additive A in a granular or powdery form.

The granular or powdery additive A is adapted to be supplied to the dispenser 6 in order to be intimately mixed with the carrier F: additive A is designed to provide suitable chemical-physical properties to the pellets, such as fertilizing, amending properties, etcetera. Specifically, additive A comprises at least one compound selected in the group of the following compounds: clay, urea, sodium sulphates, potassium, calcium, ammonium, sodium phosphates, sodium carbonates, wood ash, coal, wood shavings, vegetal masses, starches, and obviously mixtures thereof.

In the following of the description, such additive will be further discussed and described specifically about its functions.

In the attached figures, a preferred configuration wherein source 5 comprises a second reservoir 12 adapted to contain the additive A is represented. Reservoir 12 comprises, in a non-limiting way, a silos which, as for the reservoir 11, comprises a bottom wall, a side wall, and an upper wall.

The bottom wall advantageously is in the shape of a funnel enabling to drive the additive A to at least one exit 12a of reservoir 12. Advantageously, apparatus 1 comprises valves 14 associated to reservoir 12 and particularly arranged at the exit 12a of the latter. Valves 14 are configured to enable to supply additive A exiting said second reservoir 12.

As it is shown particularly in Figure 3, apparatus 1 comprises, in a non-limiting way, a dispenser 25 associated to the supply line 3, particularly positioned between the inlet and exit 3a, 3b of the same supply line 3; dispenser 25 is formed for example by a hopper adapted to receive additive A exiting the reservoir 12 and supply into the dispenser 6.

Indeed, dispenser 25 enables to control with high accuracy the quantity of additive A to be mixed with carrier F and consequently facilitates the control of the fertilizing pellets composition.

For example, a gravimetric-type dispenser can be used.

The exit 12a of reservoir 12 is connected (in fluid communication with) to a second supply line 3: the latter being adapted to enable to withdraw the additive A from reservoir 12 and introduce the same in the dispenser 6 (dispenser 6 will be better described in the following). More specifically, supply line 3 extends from an inlet 3a, in communication with the exit 12a of reservoir 12, to an exit 3b communicating with dispenser 6.

As previously mentioned, apparatus 1 comprises a dispenser 6 connected to the first and second supply lines 2, 3 and configured to receive carrier F and additive A. Particularly, dispenser 6 is configured to move carrier F and additive A along an advancement direction 10 and simultaneously enable to mix them. The mixture of carrier F and additive A enables to form a fertilizing dispersion C which will then constitute the fertilizing pellets.

More particularly, apparatus 1 is configured to continuously send the carrier F and additive A to the dispenser 6 which continuously mixes and moves the liquid carrier F and additive A: dispenser 6 is configured to form the fertilizing dispersion C during the movement of the carrier F and additive A along the movement direction 10 for enabling to continuously supply the fertilizing dispersion C from the dispenser 6.

Dispenser 6 comprises a mixing element 30 configured to mix the carrier F and additive A simultaneously with the continuous advancement step.

Particularly, mixing element 30 comprises, in a non-limiting way, an extruder 15 having a prevailing extension direction and extending between a first and second ends 31, 32. The movement of carrier F and additive A occurs along the advancement line 10 which has a direction starting from the first end 31 pointing to the second end 32 of the extruder 15.

As it is visible from the detail of Figure 3, the dispenser 6 comprises a first and second inlets 6a, 6b fluidically communicating respectively with the exits 2b, 3b of the first and second supply lines 2, 3. Indeed, inlets 6a, 6b enable to introduce the carrier F and additive A in the extruder 15 through the supply lines 2, 3.

As previously mentioned, dispenser 6, besides moving the carrier F and additive A, is configured to enable to mix them. For this reason, the first and second inlets 6a, 6b are advantageously located at a first half of the extruder 15 receiving said first end 31.

First inlet 6a is positioned between the first and second ends 31, 32 of the latter, particularly at the center line of the extruder 15. Second inlet 6b is advantageously positioned at the first end 31, advantageously downstream the first inlet.

Independently of the above mentioned absolute positioning, in relative terms, it is observed that the additive A inlet is positioned upstream the inlet of the liquid carrier F. Introducing the additive A in a granular or powdery form upstream the introduction of the liquid carrier F enables to substantially define a solid plug formed by the granular or powdery additive which is pushed by the dispenser to the exit of the latter. The introduction of the liquid carrier from the first inlet enables the latter to be mixed with the solid plug advancing from an exit 6c of the dispenser 6 to form said fertilizing dispersion C.

Indeed, introducing the carrier F downstream the additive enables the liquid carrier to advance along the advancement direction 10, particularly with additive A.

Indeed, the introduction of carrier F and additive A in the first half of the extruder 15 enables the latter to perform a correct mixing during the movement of the carrier and additive in the direction of the second end 32 for forming the fertilizing dispersion C.

As it was previously mentioned and specifically shown by Figure 3, dispenser 6 further comprises an exit 6c located at the second end 32: the exit 6c being adapted to enable to eject the fertilizing dispersion C outside the extruder 15.

More particularly, possibly the exit area of the extruder has a throttling 33 adapted to receive the fertilizing dispersion and increase the pressure before its ejection. A nozzle 34 communicating with the throttling 33 has a passage cross-section smaller than the passage cross-section of the extruder substantially at the first and second inlets 6a, 6b.

Nozzle 34 receives the compressed dispersion C and enables its ejection, particularly nozzle 34 defines the exit 6c of dispenser 6.

Extruder 15 has Internally at least one helix or screw (for example shown in Figure 3) adapted to rotate inside the extruder 15 around an axis parallel to the prevailing extension direction of the extruder itself: the rotation of the screw or helix enables the extruder 16 to move (push) carrier F (entering from the first inlet 6a) and additive A (entering from the second inlet 6b) along the advancement line 10 and simultaneously enables to mix them. In the attached figures, a single-screw extruder has been shown in a non-limiting way. However, the extruder 15 can comprise one or more pushing elements (screws or helixes) and define for example a twin-screw element.

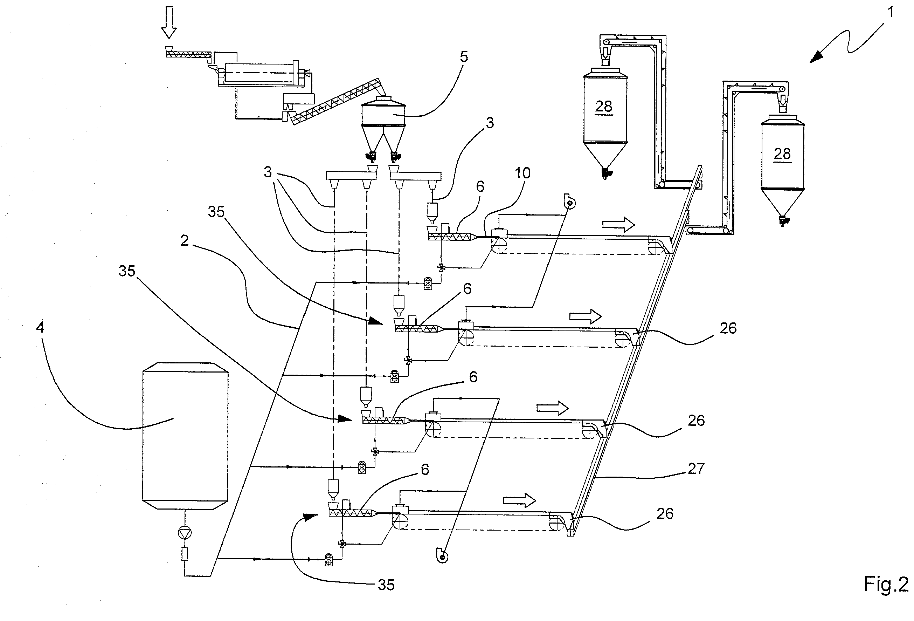

As it is visible in Figures 1 and 2, the dispenser 6 advantageously comprises a motor 24 operating the screw or helix adapted to enable its rotation. The rotation of the helix or screw 30 drives the dispersion C to the throttling 33 (compression of dispersion C) and then inside the nozzle 34 to be then ejected.

As it is visible in the attached figures, apparatus 1 further comprises a pelletizer 7 arranged at the exit 6c of dispenser 6; pelletizer 7 is configured to continuously receive the fertilizing dispersion C exiting the nozzle 34 and (also continuously) form fertilizing pellets.

Pelletizer 7 comprises, in a non-limiting way, a roll adapted to rotate around an axis orthogonal to the advancement line 10. A plurality of ejection nozzles present on the outer surface of the roll enable to expel the fertilizing dispersion C which, exiting the dispenser 6, is introduced into the pelletizer drum. As previously mentioned, dispersion C exiting the dispenser 6 is in a liquid form.

The drops of the liquid dispersion exiting the pelletizer nozzles are suitably deposited, according to desired quantities and size on a conveyor belt adapted to cool the drops in order to solidify them, in other words they will have a pellet form.

The exit 6c of the dispenser, besides enabling the ejection of the dispersion C, possibly also enables the ejection of gasses and/or vapors formed by the extrusion of the material. Apparatus 1 can comprise an aspirator 20 substantially positioned at the exit 6c of the dispenser 6; aspirator 20 is configured to enable the withdrawal of gasses and/or vapors generated during the ejection of the fertilizing dispersion C from the dispenser 6.

More particularly, the aspirator 20 comprises at least one collecting hood 21 positioned at the exit 6c of dispenser 6 and adapted to contain the gasses and/or vapors generated during the expulsion of the fertilizing dispersion from said dispenser 6. Hood 21 is in fluid communication with at least one discharge line 22 adapted to enable to withdraw and then eject the gasses collected by hood 21. The withdrawal and ejection of the gasses is ensured by the presence of at least one ejection device 23 (for example a fan) operative on the discharge line 22 and configured to direct the gasses and/or vapors from collecting hood 21 into the discharge line 22 for ejecting them.

As it is visible in the attached figures, apparatus 1 comprises at least one conveyor belt 8 adapted to receive discrete liquid quantities of the liquid fertilizing dispersion which will form the pellets, cool the latter so that they can be converted from the liquid or semi-liquid form to the solid form and moving them along an exit line 16. Conveyor belt 8 ends with a distributor 26 adapted to guide the expulsion of the solidified pellets from the belt 8 itself.

Apparatus 1 further comprises a cooling device (not shown in the attached figures) associated to the conveyor belt 8; the cooling device, such as a series of sprinkles spraying a refrigerating liquid (for example water) operating on the bottom surface of the conveyor belt, is configured to lower the temperature of the fertilizing dispersion C exiting the dispenser 6, particularly it enables to take the pellets moving on the conveyor belt to a temperature comprised between 20°C and 70°C, still more particularly comprised between 20°C and 50°C.

A practical example of the cooling device can be represented by a water circuit adapted to cool down the belt 8 on which the pellets are moved: the belt cooling enables to cool down also the pellets contacting the latter with a consequent formation of pellets in the solid state.

A further example of the cooling device can be represented by a blowing system positioned above the belt 8: the blowing system generates a cool air flow adapted to hit the pellets moving on belt 8.

The quantity of carrier F and additive A sent by the respective sources 4, 5 enables to define the ratio between carrier F and additive A present in the fertilizing dispersion C and consequently enables to define the different properties of the pellets. More specifically, the fertilizing dispersion C has a percentage of carrier F greater than 70%, particularly greater than 80%, still more particularly greater than 85%. Referring to the concentrations of additive A, this is present in the dispersion with a percentage greater than 2%, particularly greater than 10%, still more particularly greater than 15%.

In the attached figures, it is shown a preferred embodiment of apparatus 1, which is further provided with at least one bypass line 17 (shown for example in Figures 1 and 2) hydraulically connected to the first supply line 2 and configured to directly supply carrier F to pelletizer 7 by bypassing the dispenser 6. In order to bypass the dispenser 6, apparatus 1 is provided with at least one shut-off element 18 positioned in the first supply line 2 upstream the exit 2b of the latter; shut-off element 18 being in fluid communication with both the first supply line 2 and bypass line 17.

The shut-off element 18 is configured to define a normal operative condition wherein this condition enables the carrier to pass through the overall supply line 2 to the dispenser 6 while it shuts off the passage of carrier F thorough the bypass line 17. The shut-off element 18 is further configured to define a bypass condition wherein it prevents carrier F to reach dispenser 6 while it enables the fluid to pass through the bypass line 17. Indeed, the shut-off element 18 can comprise a manual valve or a three-way solenoid valve.

In a preferred embodiment of apparatus 1, it comprises a control unit 9 which is connected to at least one among the pump 13, batcher 14 and dispenser 6. Control unit 9 is operative at least on said pump 13 and is configured to drive the latter in order to control the flow rate of the liquid carrier F to be sent to the dispenser 6. The flow rate control of the solution enables to control the concentration of the latter in the pellets. For monitoring with a greater reliability the operation of pump 13 it is possible to connect control unit 9 also to the volumetric meter 19: in this way control unit 9 drives the pump 13 and checks by the meter the actual supply of carrier F. By this check, control unit 9 can continuously set the pump 13 based on measurements performed by the meter: in this way, control unit 9 enables an optimal management with reference to the carrier F quantity to be sent to the dispenser 6.

Control unit 9, as represented in Figure 1, can be further connected also to the shut-off element 18 and configured to command the latter to position itself in the normal operative condition or bypass condition.

As previously mentioned, control unit 9 is at least also connected to the gravimetric batcher 25 and is configured to drive the latter in order to manage the additive A quantity to be sent to dispenser 6: in this way the control unit manages the additive concentration present in pellets.

Control unit 9 is further connected to dispenser 6 in order to enable to manage the flow rate of the fertilizing dispersion C to be sent to the pelletizer 7. Particularly, control unit 9 is connected to the motor 24 adapted to control the rotation speed of the helix or worm: by the management of motor 24, control unit enables to drive the rotation speed of the helix or screw with a consequent control of the advancement speed of dispersion C.

As it is visible from the diagram of Figure 1, control unit 9 is further connected to the pelletizer 7 and belt 8. Indeed, based on the ejection speed of dispersion C, control unit 9 manages the speed of formation of pellets and the transport speed of belt 8.

As it is visible in the diagram of Figure 1, control unit 9 can be further connected to the aspirator 20, distributor 26 in order to manage and control respectively the operation of aspirator and the pellets ejection.

Figure 1 represents, in a non limiting way, a first embodiment of apparatus 1 which is formed by just one dispenser 6 supplied by just one first and second supply lines 2, 3.

Figure 2 represents a practical variant consisting of a plurality of supply lines 2, 3 adapted to supply several dispensers 6. Indeed, the embodiment of Figure 2 schematically shows an apparatus 1 comprising several pellet production lines 35. It is possible to configure the production lines 35 so that each of them supplies pellets having different concentrations of carrier F and/or additive A. In the embodiment of Figure 2, distributor 26 of each production line 35 supplies a switching belt 27 configured to collect pellets exiting each production line 35 and supplies the latter to different collecting reservoirs 28.

### Process for producing a fertilizer in pellet form

It is a further object of the present invention a process for producing a fertilizer in pellet form.

The process comprises a first step of collecting a certain quantity of carrier F in the first reservoir 11. The carrier F inside the first reservoir 11 is heated by a heating device 15 and is taken to a temperature comprised between 70°C and 200°C, particularly comprised between 80°C and 180°C, still more particularly comprised between 90°C and 150°C. Heating the carrier F heating enables to make and keep it in the liquid state so that said solution F can be managed in the other process steps.

The process provides to continuously supply, through the first supply line 2, the liquid solution F by the operation of pump 13 which enables to withdraw said carrier F from first reservoir 11 (first source 4) and (continuously) supply it to the dispenser 6 through the first inlet 6a.

More specifically, in a practical example, the pump is configured to continuously supply a carrier F flow rate greater than 7,000 kg/hr, particularly comprised between 9,000 kg/hr and 10,000 kg/hr.

Simultaneously with the supply of solution F to dispenser 6, the process provides to continuously supply the additive A to said dispenser 6 through the second supply line 3. The supply step of the additive A provides to operate the valves 14 and gravimetric batcher 25 which enables to withdraw said additive A from second reservoir 12 (second source 5) and (continuously) supply it to the dispenser 6 through the second inlet 6b.

More particularly, batcher 25 enables to continuously send to the dispenser a quantity of additive A greater than 1,800 kg/hr, particularly comprised between 2,000 kg/hr and 2,400 kg/hr.

As previously described, second inlet 6b of additive A is upstream the first inlet 6a of the carrier; the process therefore provides to introduce the additive upstream the carrier. Such introduction sequence enables to form a solid plug of granular or powdery additive upstream the first inlet 6a. The additive A solid plug is pushed by the mixing element in the direction of the exit 6c of the dispenser.

The carrier introduction through the first inlet positioned downstream the second inlet enables the carrier to hit the solid plug in order to form the fertilizing dispersion C. In this way, the additive (a solid plug of granular or powdery material) enables the carrier to advance to the exit 6c.

Carrier F and additive A in the dispenser 6 are continuously moved to the exit 6c of the latter along the movement direction 10: the movement is generated by the operation of motor 24 which puts in rotation the helix or screw 30.

Simultaneously with the continuous movement of carrier F and additive A, dispenser 6 mixes the latter to obtain the fertilizing dispersion C. The helix or screw 30 pushes the fertilizing dispersion C through the throttling 33 from where the dispersion is compelled to pass through the nozzle 34. Indeed, dispersion C is continuously moved inside the dispenser 6 and ejected, still continuously, through the exit 6c.

Specifically, the process enables to continuously supply a quantity of the fertilizing dispersion C greater than 8,000 kg/hr, particularly comprised between 11,000 kg/hr and 15,000 kg/hr.

The concentrations of the carrier F and additive A in the dispersion and consequently in the pellets vary as a function of the quantities of the same.

Particularly, the dispersion C, exiting the dispenser 6, has a percentage of carrier F greater than 70%, particularly greater than 80%, still more particularly greater than 85%. The concentration of additive A present in the fertilizing dispersion C exiting the dispenser 6, is greater than 2%, particularly greater than 10%, still more particularly greater than 15%.

During the ejection of dispersion C, there is a possible formation of gasses or vapors at the exit 6c of dispenser 6. The process can comprise, in a non-limiting way, a step of sucking said gasses or vapors from the area where the dispersion C exits.

Particularly, the process provides a step of turning on the ejection device 23 (for example a fan) which is in communication with the discharge line 22 which in turn is connected to the collecting hood 21. The gasses and/or vapors generated when the dispersion C exits the dispenser 6, are contained and collected by the hood 21. The operation of the device 23 enables to drive said gasses inside the discharge line 22 and then they are ejected from the same device 23. Generally, the sucking step is performed in order to take the gasses and/or vapors generated by the dispersion C ejection step, far from the production area. The fertilizing dispersion C is generally formed by solutions or chemical compounds which can generate irritant gasses and/or vapors or anyway be removed from the work area: the removal of the gasses enables to keep safe the production site and in optimal working conditions.

The dispersion C exiting the dispenser 6 is continuously sent to the pelletizer 7 which is configured to enable the formation of pellets formed by said fertilizing dispersion C.

Indeed, the pelletizer 7 collects the fertilizing dispersion C continuously arriving from the dispenser and manufactures pellets on the conveyor belt. The step of pelletizing dispersion C is per se known and can be performed by different types of pelletizing units or pelletizers 7 and therefore will be not further explained.

Pelletizer 7 continuously manufactures a plurality of dispersion C pellets which are deposited on belt 8 moving the pellets along the exit line 16 and to the distributor 26.

The pellets moving on belt 8 are cooled down and taken to the solid state.

The process, as configured, enables to continuously produce a number of fertilizing pellets greater than 40,000,000 pellets/hr, particularly greater than 42,000,000 pellets/hr, still more particularly greater than 43,000,000 pellets/hr.

The described process refers, in a non-limiting way, to just one production line 35, in other words to a process using just one dispenser 6 provided with only two supply lines 2 and 3.

However, it is not excluded the possibility of providing a plurality of first and second supply lines 2 and 3 adapted to supply several dispensers 6 (condition shown in Figure 2).

Each of said lines 2, 3 can be supplied with different flow rates of the carrier F or additive A so that each dispenser 6 can supply different pellets (different concentrations of the solution F and additive A).

Both in case there is only one dispenser 6 and in case there are a plurality of dispensers 6, the process can provide the presence of a control unit 9 which enables, in a non-limiting way, to monitor and manage the overall process.

### Fertilizer in pellet form

The method and the plant, as described, can be obviously used for producing any kind of fertilizer in pellet form.

However, here it is described an example of a fertilizing composition which is deemed particularly interesting and which can be produced in pellet form.

It is observed that the same pellets (as explained in the following) can be advantageously produced by the described process, but also by plants having a reservoir for batch mixing a carrier F and additive A.

Generally, the pellet fertilizer comprises a plurality of discrete elements or pellets having a shape and size which are almost similar and have the same composition. The weight of at least 90% of the pellets of fertilizer is less than 100 gr, particularly less than 80 gr, still more particularly less than 50 gr.

Each pellet is substantially formed by a carrier F comprising at least one of the following components: sulphur, urea, ammonium nitrate, paraffin, natural resin, synthetic resin, and it is present in the dispersion in percentage by weight not less than 70% (the percentage by weight of the carrier (F) is generally greater than 80%), particularly greater than 85%).

The composition then provides the presence of at least one additive A homogeneously dispersed in the carrier F; additive A comprises at least one substance adapted to perform a disgregating mechanical function of the pellet, for example in the presence of water or moisture.

Indeed, since the carrier which at a room temperature (for example 25°C) is in a solid state, is substantially insoluble in water, it is necessary to add a component which causes its disgregation, particularly by a mechanical-type action. To this end, the more interesting carriers are sulphur or urea. To this end, the specific weight of carrier F, when consists of urea, is greater than 1.3 kg/dm³, when consists of sulphur, is greater than 1.9 kg/dm³.

To this end, the substance adapted to perform the disgregating mechanical function of the pellet in the presence of rain or irrigation comprises vegetal fibers. Illustratively, it is possible to use wood, wood shavings or anyway wood-based waste materials, vegetal masses, starches, stubbles and/or combinations thereof.

Preferably, but not in a limiting way, the substance adapted to perform a disgregating mechanical function of the pellet is dispersed in the pellet in a particulate form, whose particles have a granulometry greater than 50 microns and less than 150 microns, particularly comprised between 80 and 120 microns.

Indeed, in the presence of moisture, this substance absorbs water and increases the volume. Since this substances are intimately dispersed in the pellet, they cause the disgregation of the fertilizing pellet so that the components can be used for crop farming.

The specific weight of a substance adapted to perform a disgregating mechanical function of the pellet is less than 1.7 kg/dm³, particularly less than 1.5 kg/dm³.

It is observed that the substance adapted to perform a disgregating mechanical function of the pellet is present in percentage greater than 2% by weight, but less than 10% by weight, and particularly less than 70% by weight. Indeed, the use of vegetal fibers having a low weight enables to reduce the percentage of such components against a possible increment of other additives, particularly micronutrients, as explained in the following.

As said, the additive can comprise more or less other components such as micronutrients or sanitizing elements.

In general terms, the percentage by weight of the additive A is generally greater than 10% and particularly greater than 15% and is in percentage by weight less than 20% and particularly greater than 16% by weight.

The possible micronutrient substance/substances comprises/comprise urea, sodium sulphates, potassium, calcium, ammonium, sodium phosphates, sodium carbonates, wood ash or combinations thereof and makes/make up in percentage by weight, less than 15%, more particularly less than 12% of the overall weight of the pellet.

Generally, the micronutrient substance is present in percentage by weight greater than 5%, more particularly greater than 8% by weight.

If desired, the additive (A) can comprise at least one sanitizing substance, such as coal.

### ADVANTAGES OF THE INVENTION

Due to the use of the process for producing a fertilizer adapted to continuously supply the dispenser 6, it is possible to substantially reduce the pellets production time (a fast pellet production in order to enable a drop of the product cost).

The above described apparatus is configured to enable to mix the carrier F and additive A inside the dispenser 6 simultaneously with the displacement of the latter along the advancement line 10 in an extremely quick and effective way. The reduced size of the apparatus 1 and the small number of components, besides enabling to reduce the production time, enables to make extremely economical the overall production system and make easier its maintenance and management.

The process and apparatus are extremely versatile so that they enable to modify the compositions of the fertilizer substantially in real time and without substantial waste.

Further, the particular described composition enables to obtain fertilizing pellets at a cost below than the ones commercially available and wherein the percentage of micronutrients, usually not greater than 5%, can be taken to a percentage of about 10%.

## Claims

1. Process for producing a fertilizer in pellet form comprising the following steps:
- predisposing at least one supply line (2) adapted to enable at least one carrier (F) to pass,
- predisposing at least one second supply line (3) adapted to enable at least one additive (A) in a granular or powder form to pass,
- predisposing at least one source (4) of carrier (F), adapted to supply the first supply line (2),
- predisposing at least one source (5) of additive (A) in granular or powder form, adapted to supply the second supply line (3),
- predisposing at least one dispenser (6) communicating with at least said sources (4; 5) respectively by means of the first and second supply lines (2; 3),
and wherein the process for producing the fertilizer in pellet form further comprises the following steps:
- continuously sending the carrier (F) arriving from the corresponding source (4), through the first supply line (2), to the dispenser (6), wherein carrier (F) is supplied to dispenser (6) in a liquid or solid form,
- continuously sending the additive (A) arriving from the corresponding source (5), through the second supply line to the dispenser (6),
- moving carrier (F) and additive (A) along a process advancement direction (10) internally of the dispenser (6),
- mixing carrier (F) and additive (A) internally of the dispenser (6) for obtaining a fertilizing dispersion (C) in a liquid or semi-liquid form, the mixing step comprising a sub-step of continuously advancing carrier (F) and additive (A) by pushing them along the advancement direction (10) by at least one mixing element (30), the mixing element (30) mixing the carrier and additive simultaneously with the continuous advancing step, wherein the carrier (F), when in the solid form, is liquefied during mixing internally of the dispenser (6),
- continuously dispensing said fertilizing dispersion (C) in a liquid or semi-liquid form to a pelletizer (7) configured to enable to form the fertilizing pellets (C),
- forming the pellets by the pelletizer (7) by supplying the fertilizing dispersion in drop form on at least one support element,
- cooling said pellets on said support element in order to enable to at least partially solidify the latter,
wherein the mixing step is continuously performed and simultaneously with the carrier (F) and additive (A) moving step along the advancement direction (10) in order to enable to continuously supply the fertilizing dispersion (C) on the pelletizer (7).

2. Process according to claim 1, wherein the step of mixing carrier (F) and additive (A) internally of dispenser (6) for obtaining a fertilizing dispersion (C) comprises a sub-step of putting in rotation the mixing element (30) for example an advancing screw or helix, in order to advance and mix the carrier and additive with each other, a rotation axis of the mixing element (30) being substantially parallel, and particularly substantially coinciding with the advancing direction.

3. Process according to anyone of the preceding claims, wherein the step of mixing carrier (F) and additive (A) internally of dispenser (6) for obtaining a fertilizing dispersion (C), comprises a sub-step of mixing by at least one extruder pushing the carrier (F) and additive (A) by a mixing element (30) along and around the advancement direction (10) following a substantially helical path.

4. Process according to anyone of the preceding claims, wherein an inlet (6b) to additive dispenser (6) is located upstream, along the advancement direction (10), of a carrier inlet (6a), the additive encountering the carrier following its movement along the advancement direction (10) and mixing with the latter inside the extruder (6), particularly an inlet (6b) of the extruder of the additive being upstream, along the advancement direction (10), of a carrier inlet (6a), the additive encountering the carrier following its movement along the advancement direction (10) and mixing with the latter inside the extruder (6).

5. Process according to anyone of the preceding claims, wherein the step of continuously supplying carrier (F) to dispenser (6) comprises a sub-step of batching the flow of the latter arriving from source (4) and entering dispenser (6), adapted to regulate the quantity of fertilizing solution (F) present in the fertilizing dispersion (C), the batching being obtained by controlling, with a control unit (9), an advancement pump (13), for example a geared pump, the step of continuously supplying additive (A) to dispenser (6) comprising a sub-step of batching the quantity of the latter arriving from additive source (5) and entering dispenser (6) adapted to regulate the quantity of additive of fertilizing dispersion (C), the batching being obtained by controlling an additive quantity dispensed by a gravimetric batcher (25).

6. Process according to anyone of the preceding claims, wherein the fertilizing dispersion (C), exiting dispenser (6), has a percentage by weight of carrier (F) greater than 70%, particularly greater than 80%, and wherein the fertilizing dispersion (C), exiting dispenser (6), has a percentage by weight of additive (A) greater than 2%, particularly greater than 10%.

7. Process according to anyone of the preceding claims, wherein carrier (F) comprises at least one component comprised in the group of the following components: sulphur, urea, ammonium nitrate, paraffin, natural resin, synthetic resin and wherein additive (A) comprises at least one selected in the group of the following substances: clay, urea, sodium sulphates, potassium, calcium, ammonium, sodium phosphates, sodium carbonates, wood ash, coal, wood shavings, vegetable masses, starches.

8. Process according to anyone of the preceding claims, wherein additive (A) comprises at least one substance adapted to perform a disgregating mechanical function of the pellet, for example in the presence of water or moisture, said substance adapted to have a disgregating mechanical function of the pellet being selected in the group comprising bentonite, clay, wood or derivatives thereof, vegetal mass, starch, stubbles or combinations thereof.

9. Process according to anyone of the preceding claims, wherein additive (A) comprises at least one micronutrient substance, said micronutrient substance being particularly selected in the group comprising urea, sodium sulphates, potassium, calcium, ammonium, sodium phosphates, sodium carbonates, wood ash or combinations thereof, additive (A) optionally comprising at least one disinfectant substance such as coal.

10. Process according to anyone of the preceding claims, further comprising the following steps:
- heating carrier (F) at least before the step of inserting the same internally of dispenser (6), said heating step being configured to take carrier (F) to the liquid state at a temperature comprised between 70°C and 200°C;
- forming the pellets by the pelletizer (7) by dispensing the fertilizing dispersion in drop form on at least one conveyor belt (8), the pellet forming step comprising at least the sub-steps of sending the fertilizing dispersion (C) internally of the pelletizer in a liquid or semi-liquid state, moving in rotation pelletizer (7) and dispensing a predetermined quantity of fertilizing dispersion (C) on the conveyor belt through a plurality of depositing nozzles;
- cooling said pellets passing on said conveyor belt (8) in order to enable to at least partially solidify the latter, the pellet cooling step enabling to take the latter to a temperature less than 70°C, for example less than 50°C.

11. Process according to anyone of the preceding claims, wherein carrier (F) is substantially formed by a material which is present at the liquid state when is taken to a temperature of 200°C at atmospheric pressure.

12. Apparatus (1) for producing a fertilizing in pellet form comprising:
- at least one first supply line (2) configured to enable at least one carrier (F) to pass, said first supply line (2) having at least one inlet (2a) connectable to one source (4) adapted to supply said carrier (F) and at least one outlet (2b) for supplying the same, the first supply line (2) is alternatively configured to enable the passage of at least one carrier (F) in a liquid form or carrier (F) in a solid form;
- at least one second supply line (3) configured to enable at least one additive (A) in granular and/or powder form to pass, said second supply line (3) having at least one inlet (3a) connectable to a source (5) adapted to supply said additive (A) and at least one outlet (3b) for supplying the same,
- at least one dispenser (6) having a first and second inlets (6a; 6b) respectively hydraulically connected to outlets (2b; 3b) of first and second supply lines (2; 3), said first and second inlets enabling the dispenser to receive at the inlet carrier (F) and additive (A) arriving from corresponding sources (4; 5), said dispenser (6) comprising at least one screw extruder being configured to move carrier (F) and additive (A) along an advancement direction (10) and simultaneously enable their mixing, the carrier (F) when in solid form, being liquefied during the mixing in the dispenser (6), said dispenser being further configured to mix carrier (F) and additive (A) and define a fertilizing dispersion (C) in liquid or semi-liquid form, said dispenser (6) further comprising at least one outlet (6c) adapted to enable the supply of the fertilizing dispersion (C) exiting dispenser (6),
and wherein apparatus (1) is configured to continuously supply carrier (F) and additive (A) to the dispenser (6), said dispenser (6) being configured to continuously mix carrier (F) and additive (A) and simultaneously with the moving of the latter along said advancement direction (10), said dispenser (6) being configured to define the fertilizing dispersion (C) during the carrier (F) and additive (A) moving along the movement line for enabling to continuously supply the fertilizing dispersion (C) in a liquid or semi-liquid form from said dispenser (6),
- at least one pelletizer (7) located at the outlet (6c) of dispenser (6), pelletizer (7) being configured to continuously receive the fertilizing dispersion (C) in a liquid or semi-liquid form exiting dispenser (6), and continuously form pellets.

13. Apparatus according to the preceding claim further comprising a conveyor belt (8) located downstream pelletizer (7), pelletizer (7) comprising a predetermined number of depositing nozzles and supplying the fertilizing dispersion in drop form on said conveyor belt (8), fertilizing dispersion (C) being internally of the pelletizer in a liquid or semi-liquid state.

14. Apparatus according to the preceding claim, wherein a pelletizer rotation (7) enables to supply a predetermined quantity of fertilizing dispersion (C) on the conveyor belt through the plurality of depositing nozzles, said pellets passing on said conveyor belt (8), being cooled in order to enable to at least partially solidify the latter, the pellets cooling step enabling to take the latter to a temperature less than 70°C, for example less than 50°C.

## Patentansprüche

1. Verfahren zur Herstellung eines Pellet-förmigen Düngemittels, das die folgenden Schritte aufweist:
- Prädisponieren von zumindest einer Zufuhrleitung (2), die dazu ausgelegt ist, den Durchtritt von zumindest einem Träger (F) zu ermöglichen,
- Prädisponieren von zumindest einer zweiten Zufuhrleitung (3), die dazu ausgelegt ist, den Durchtritt von zumindest einem Additiv (A) in granulärer oder Pulverform zu ermöglichen,
- Prädisponieren von zumindest einer Quelle (4) des Trägers (F), die dazu ausgelegt ist, die erste Zufuhrleitung (2) zu versorgen,
- Prädisponieren von zumindest einer Quelle (5) des Additivs (A) in granulärer oder Pulverform, die dazu ausgelegt ist, die zweite Zufuhrleitung (3) zu versorgen,
- Prädisponieren von zumindest einem Spender (6), der mit zumindest den Quellen (4; 5) jeweils mittels der ersten und zweiten Zufuhrleitung (2; 3) in Verbindung steht,
und wobei das Verfahren zur Herstellung des Pellet-förmigen Düngemittels ferner die folgenden Schritte aufweist:
- kontinuierliches Senden des Trägers (F), der von der entsprechenden Quelle (4) ankommt, durch die erste Zufuhrleitung (2) zu dem Spender (6), wobei der Träger (F) dem Spender (6) in flüssiger oder fester Form zugeführt wird,
- kontinuierliches Senden des Additivs (A), das von der entsprechenden Quelle (5) ankommt, durch die zweite Zufuhrleitung zu dem Spender (6),
- Bewegen des Trägers (F) und des Additivs (A) entlang einer Prozessfortbewegungsrichtung (10) im Inneren des Spenders (6),
- Mischen des Trägers (F) und des Additivs (A) im Inneren des Spenders (6), um eine Düngerdispersion (C) in flüssiger oder halbflüssiger Form zu erhalten, wobei der Mischschritt einen Teilschritt aufweist, den Träger (F) und das Additiv (A) kontinuierlich voranzubewegen, indem sie durch zumindest ein Mischelement (30) entlang der Fortbewegungsrichtung (10) geschoben werden, wobei das Mischelement (30) den Träger und das Additiv gleichzeitig mit dem kontinuierlichen Fortbewegungsschritt mischt, wobei der Träger (F), wenn er in der festen Form ist, während des Mischens innerhalb des Spenders (6) verflüssigt wird,
- kontinuierliches Spenden der Düngerdispersion (C) in flüssiger oder halbflüssiger Form zu einem Pelletierer (7), der konfiguriert ist, um die Formung der Düngerpellets (C) zu ermöglichen,
- Formen der Pellets durch den Pelletierer (7) durch Zuführen der Düngerdispersion in Tropfenform auf zumindest ein Trägerelement,
- Kühlen der Pellets auf dem Trägerelement, um zu ermöglichen, dass das letztere zumindest teilweise fest wird,
wobei der Mischschritt kontinuierlich und gleichzeitig mit dem Träger (F) und Additiv-(A -Bewegungsschritt entlang der Fortbewegungsrichtung (10) durchgeführt wird, um die kontinuierliche Zufuhr der Düngerdispersion (C) auf den Pelletierer (7) zu ermöglichen.

2. Verfahren nach Anspruch 1, wobei der Schritt des Mischens von Träger (F) und Additiv (A) im Inneren des Spenders (6) zum Erhalt einer Düngerdispersion (C) einen Teilschritt aufweist, das Mischelement (30) zum Beispiel mit einer Förderschnecke oder Schraube in Drehung zu versetzen, um den Träger und das Additiv voranzubewegen und miteinander zu vermischen, wobei eine Drehachse des Mischelements (30) im Wesentlichen parallel zur Fortbewegungsrichtung ist und insbesondere mit dieser zusammenfällt.

3. Verfahren nach einem der vorhergehenden Ansprüche, wobei der Schritt des Mischens von Träger (F) und Additiv (A) im Inneren des Spenders (6) zum Erhalt der Düngerdispersion (C) einen Teilschritt des Mischens des durch zumindest einen Extruder aufweist, der den Träger (F) und das Additiv (A) durch ein Mischelement (30) entlang und um die Fortbewegungsrichtung (10) einem im Wesentlichen schraubigen Weg folgend, schiebt.

4. Verfahren nach einem der vorhergehenden Ansprüche, wobei ein Einlass (6b) zum Additiv-Spender (6) entlang der Fortbewegungsrichtung (10) stromauf eines Trägereinlasses (6a) angeordnet ist, wobei das auf den Träger treffende Additiv dessen Bewegung entlang der Fortbewegungsrichtung (10) folgt und sich mit dem letzteren innerhalb des Extruders (6) mischt, wobei insbesondere ein Einlass (6b) des Additiv-Extruders entlang der Fortbewegungsrichtung (10) stromauf eines Trägereinlasses (6a) angeordnet ist, wobei das auf den Träger treffende Additiv dessen Bewegung entlang der Fortbewegungsrichtung (10) folgt und sich mit dem letzteren innerhalb des Extruders (6) mischt.

5. Verfahren nach einem der vorhergehenden Ansprüche, wobei der Schritt des kontinuierlichen Zuführens des Trägers (F) zu dem Spender (6) einen Teilschritt aufweist, den Fluss des letzteren, der von der Quelle (4) ankommt und in den Spender (6) eintritt, zu portionieren, der ausgelegt ist, um die Menge der sich in der Düngerdispersion (C) befindlichen Düngerlösung (F) zu regulieren, wobei das Portionieren erhalten wird, indem mit einer Steuereinheit (9) eine Förderpumpe (13), zum Beispiel eine Zahnradpumpe, gesteuert wird, wobei der Schritt des kontinuierlichen Zuführens von Additiv (A) zum Spender (6) einen Teilschritt aufweist, die Menge des letzteren, die von der Additivquelle (5) ankommt und in den Spender (6) eintritt, zu portionieren, der ausgelegt ist, um die Menge des Additivs der Düngerdispersion (C) zu regulieren, wobei das Portionieren erhalten wird, indem eine von einem gravimetrischen Portionierer (25) abgegebene Additivmenge gesteuert wird.

6. Verfahren nach einem der vorhergehenden Ansprüche, wobei die den Spender (6) verlassende Düngerdispersion (C) einen Gewichtsprozentsatz des Trägers (F) größer als 70% aufweist, insbesondere größer als 80%, und wobei die den Spender (6) verlassende Düngerdispersion (C) einen Gewichtsprozentsatz des Additivs (A) größer als 2%, insbesondere größer als 10%, aufweist.

7. Verfahren nach einem der vorhergehenden Ansprüche, wobei der Träger (F) zumindest eine Komponente aufweist, die in der Gruppe der folgenden Komponenten enthalten ist: Schwefel, Harnstoff, Ammoniumnitrat, Paraffin, natürliches Harz, Kunstharz, und wobei das Additiv (A) zumindest eines aufweist, das aus der Gruppe der folgenden Substanzen ausgewählt ist: Ton, Harnstoff, Natriumsulfate, Kalium, Kalzium, Ammonium, Natriumphosphate, Natriumcarbonate, Holzasche, Kohle, Holzschnitzel, pflanzliche Massen, Stärken.

8. Verfahren nach einem der vorhergehenden Ansprüche, wobei das Additiv (A) zumindest eine Substanz aufweist, die dazu ausgelegt ist, zum Beispiel in der Gegenwart von Wasser oder Feuchtigkeit eine mechanische Disgregierungsfunktion des Pellets zu haben, wobei die Substanz, die dazu ausgelegt ist, eine mechanische Disgregierungsfunktion zu haben, aus der Gruppe ausgewählt ist, welche Bentonit, Ton, Holz oder Derivate davon, pflanzliche Masse, Stärke, Stoppel oder Kombinationen davon aufweist.

9. Verfahren nach einem der vorhergehenden Ansprüche, wobei das Additiv (A) zumindest eine Spurenelementsubstanz aufweist, wobei die Spurenelementsubstanz insbesondere aus der Gruppe ausgewählt ist, welches Harnstoff, Natriumsulfate, Kalium, Kalzium, Ammonium, Natriumphosphate, Natriumkarbonate, Holzasche oder Kombinationen davon aufweist, wobei das Additiv (A) optional zumindest eine desinfizierende Substanz wie etwa Kohle aufweist.

10. Verfahren nach einem der vorhergehenden Ansprüche, das ferner die folgenden Schritte aufweist:
- Erhitzen des Trägers (F) zumindest vor dem Schritt des Einsetzens desselben in das Innere des Spenders (6), wobei der Erhitzungsschritt konfiguriert ist, um bei einer Temperatur zwischen 70°C und 200°C den Träger (F) zum flüssigen Zustand zu bringen;
- Formen der Pellets durch den Pelletierer (7) durch Spenden der Düngerdispersion in Tropfenform auf zumindest ein Förderband (8), wobei der Pellet-Formungsschritt zumindest die Teilschritte aufweist, die Düngerdispersion (C) im flüssigen oder halbflüssigen Zustand ins Innere des Pelletierers zu senden, den Pelletierer (7) drehend zu bewegen und eine vorbestimmte Menge der Düngerdispersion (C) auf das Förderband durch eine Mehrzahl von Ausgabedüsen zu spenden;
- Kühlen der auf dem Förderband (8) passierenden Pellets, um zu ermöglichen, dass die letzteren zumindest teilweise fest werden, wobei der Pellet-Kühlschritt ermöglicht, die letzteren auf eine Temperatur von weniger als 70°C zu bringen, z.B. weniger als 50°C.

11. Verfahren nach einem der vorhergehenden Ansprüche, wobei der Träger (F) im Wesentlichen aus einem Material gebildet wird, das sich im flüssigen Zustand befindet, wenn es bei Atmosphärendruck auf eine Temperatur von 200°C gebracht wird.

12. Vorrichtung (1) zur Herstellung eines Pellet-förmigen Düngers, welche aufweist:
- zumindest eine erste Zufuhrleitung (2), die konfiguriert ist, um den Durchtritt von zumindest einem Träger (F) zu ermöglichen, wobei die erste Zufuhrleitung (2) zumindest einen Einlass (2a) aufweist, der mit einer Quelle (4) verbindbar ist, die dazu ausgelegt ist, den Träger (F) zuzuführen, sowie zumindest einen Auslass (2b) zum Zuführen desselben, wobei die erste Zufuhrleitung (2) alternativ konfiguriert ist, um den Durchtritt des zumindest einen Trägers (F) in flüssiger Form oder des Trägers (F) in fester Form zu ermöglichen;
- zumindest eine zweite Zufuhrleitung (3), die konfiguriert ist, um den Durchtritt von zumindest einem Additiv (A) in granulärer und/oder Pulverform zu ermöglichen, wobei die zweite Zufuhrleitung (3) zumindest einen Einlass (3a) aufweist, der mit einer Quelle (5) verbindbar ist, die dazu ausgelegt ist, das Additiv (A) zuzuführen, und zumindest einem Auslass (3b) zum Zuführen desselben,
- zumindest einen Spender (6) mit ersten und zweiten Einlässen (6a; 6b), die jeweils mit den Auslässen (2b; 3b) der ersten und zweiten Zufuhrleitungen (2; 3) hydraulisch verbunden sind, wobei die ersten und zweiten Einlässe erlauben, dass der Spender am Einlass den Träger (F) und das Additiv (A), die von den entsprechenden Quellen (4; 5) ankommen, aufzunehmen, wobei der Spender (6) zumindest einen Schneckenextruder aufweist, der konfiguriert ist, um den Träger (F) und das Additiv (A) entlang einer Fortbewegungsrichtung (10) zu bewegen und gleichzeitig deren Vermischung zu ermöglichen, wobei der Träger (F), wenn er in fester Form ist, während des Mischens in dem Spender (6) verflüssigt wird, wobei der Spender ferner konfiguriert ist, um den Träger (F) und das Additiv (A) zu mischen und eine Düngerdispersion (C) in flüssiger oder halbflüssiger Form zu definieren, wobei der Spender (6) ferner zumindest einen Auslass (6c) aufweist, der dazu ausgelegt ist, die Zufuhr der den Spender (6) verlassenden Düngerdispersion (C) zu ermöglichen,
und wobei die Vorrichtung (1) konfiguriert ist, um den Träger (F) und das Additiv (A) dem Spender (6) kontinuierlich zuzuführen, wobei der Spender (6) konfiguriert ist, um den Träger (F) und das Additiv (A) und gleichzeitig mit der Bewegung der letzteren entlang der Fortbewegungsrichtung (10) kontinuierlich zu mischen, wobei der Spender (6) konfiguriert ist, um die Düngerdispersion (C) zu definieren, während sich der Träger (F) und das Additiv (A) entlang der Bewegungsglinie bewegen, um die kontinuierliche Zufuhr der Düngerdispersion (C) in flüssiger oder halbflüssiger Form von dem Spender (6) zu ermöglichen,
- zumindest einen Pelletierer (7), der an dem Ausgang (6c) des Spenders (6) angeordnet ist, wobei der Pelletierer (7) konfiguriert ist, um die den Spender (6) verlassende Düngerdispersion (C) in flüssiger oder halbflüssiger Form kontinuierlich aufzunehmen und kontinuierlich Pellets zu formen.

13. Vorrichtung nach dem vorhergehenden Anspruch, die ferner ein Förderband (8) aufweist, das stromab des Pelletierers (7) angeordnet ist, wobei der Pelletierer (7) eine vorbestimmte Anzahl von Ausgabedüsen aufweist und die Düngerdispersion in Tropfenform auf das Förderband (8) leitet, wobei die Düngerdispersion (C) im Inneren des Pelletierers in flüssigem oder halbflüssigen Zustand vorliegt.

14. Vorrichtung nach dem vorhergehenden Anspruch, wobei die Drehung des Pelletierers (7) ermöglicht, eine vorbestimmte Menge der Düngerdispersion (C) durch die Mehrzahl von Abgabedüsen auf das Förderband zu leiten, wobei die auf dem Förderband (8) passierenden Pellets gekühlt werden, um zu ermöglichen, dass die letzteren zumindest teilweise fest werden, wobei der Pellet-Kühlschritt ermöglicht, die letzteren auf eine Temperatur von weniger als 70°C, zum Beispiel weniger als 50°C, zu bringen.

## Revendications

1. Procédé de production d'un engrais sous forme de granulés comprenant les étapes suivantes :
- prédisposition d'au moins une ligne d'alimentation (2) adaptée pour permettre au moins à un support (F) de passer,
- prédisposition d'au moins une seconde ligne d'alimentation (3) adaptée pour permettre à au moins un additif (A) sous une forme granuleuse ou de poudre de passer,
- prédisposition d'au moins une source (4) de support (F), adaptée pour alimenter la première ligne d'alimentation (2),
- prédisposition d'au moins une source (5) d'additif (A) sous forme granuleuse ou de poudre, adaptée pour alimenter la seconde ligne d'alimentation (3),
- prédisposition d'au moins un distributeur (6) communiquant avec au moins lesdites sources (4 ; 5) respectivement à l'aide de la première et de la seconde ligne d'alimentation (2 ; 3),
et le procédé de production de l'engrais sous forme de granulés comprenant en outre les étapes suivantes :
- envoi de manière continue du support (F) arrivant de la source correspondante (4), à travers la première ligne d'alimentation (2), vers le distributeur (6), le support (F) étant alimenté au distributeur (6) sous une forme liquide ou solide,
- envoi de manière continue de l'additif (A) arrivant de la source correspondante (5), à travers la seconde ligne d'alimentation vers le distributeur (6),
- déplacement du support (F) et de l'additif (A) le long d'un sens d'avancement de procédé (10) à l'intérieur du distributeur (6),
- mélange du support (F) et de l'additif (A) à l'intérieur du distributeur (6) pour obtenir une dispersion fertilisante (C) sous une forme liquide ou semi-liquide, l'étape de mélange comprenant une sous-étape d'avancement de manière continue du support (F) et de l'additif (A) en les poussant le long du sens d'avancement (10) par l'intermédiaire d'au moins un élément de mélange (30), l'élément de mélange (30) mélangeant le support et l'additif simultanément à l'étape d'avancement continu, le support (F), lorsqu'il se trouve sous la forme solide, étant liquéfié durant le mélange à l'intérieur du distributeur (6),
- la distribution de manière continue de ladite dispersion fertilisante (C) sous une forme liquide ou semi-liquide au niveau d'un dispositif de mise en forme de granulés (7) configuré pour permettre la formation de granulés d'engrais (C),
- la mise en forme des granulés par le dispositif de mise en forme de granulés (7) en alimentant la dispersion fertilisante sous la forme de gouttelettes sur au moins un élément de support,
- le refroidissement desdits granulés sur ledit élément de support afin de permettre de solidifier au moins partiellement ce dernier,
l'étape de mélange étant continuellement exécutée et simultanément à l'étape de déplacement du support (F) et de l'additif (A) le long du sens d'avancement (10) afin de permettre d'alimenter continuellement la dispersion fertilisante (C) sur le dispositif de mise en forme de granulés (7).

2. Procédé selon la revendication 1, l'étape de mélange du support (F) et de l'additif (A) à l'intérieur du distributeur (6) pour obtenir une dispersion fertilisante (C) comprenant une sous-étape de mise en rotation de l'élément de mélange (30) par exemple d'une vis ou d'une hélice d'avancement, afin de faire avancer et de mélanger le support et l'additif l'un avec l'autre, un axe de rotation de l'élément de mélange (30) étant sensiblement parallèle, et coïncidant particulièrement sensiblement au sens d'avancement.

3. Procédé selon l'une quelconque des revendications précédentes, l'étape de mélange du support (F) et de l'additif (A) à l'intérieur du distributeur (6) pour obtenir une dispersion fertilisante (C), comprenant une sous-étape de mélange par au moins une extrudeuse poussant le support (F) et l'additif (A) par un élément de mélange (30) le long et autour du sens d'avancement (10) suite à un trajet sensiblement hélicoïdal.

4. Procédé selon l'une quelconque des revendications précédentes, dans lequel un orifice d'entrée (6b) au niveau du distributeur d'additif (6) est localisé en amont, le long du sens d'avancement (10), d'un orifice d'entrée de support (6a), l'additif rencontrant le support suite à son mouvement le long du sens d'avancement (10) et se mélangeant avec ce dernier à l'intérieur de l'extrudeuse (6), particulièrement un orifice d'entrée (6b) de l'extrudeuse de l'additif se situant en amont, le long du sens d'avancement (10), d'un orifice d'entrée de support (6a), l'additif rencontrant le support suite à son mouvement le long du sens d'avancement (10) et se mélangeant avec ce dernier à l'intérieur de l'extrudeuse (6).

5. Procédé selon l'une quelconque des revendications précédentes, l'étape d'alimentation de manière continue du support (F) au niveau du distributeur (6) comprenant une sous-étape de dosage de l'écoulement du dernier arrivant au niveau de la source (4) et pénétrant dans le distributeur (6), adaptée pour réguler la quantité de solution fertilisante (F) présente dans la dispersion fertilisante (C), le dosage étant obtenu par commande, avec une unité de commande (9), d'une pompe d'avancement (13), par exemple d'une pompe à engrenage, l'étape d'alimentation de manière continue de l'additif (A) au distributeur (6) comprenant une sous-étape de dosage de la quantité du dernier arrivant depuis la source d'additif (5) et pénétrant dans le distributeur (6) adaptée pour réguler la quantité de l'additif de dispersion fertilisante (C), le dosage étant obtenu par commande d'une quantité d'additif distribuée par un doseur gravimétrique (25).

6. Procédé selon l'une quelconque des revendications précédentes, la dispersion fertilisante (C), sortant du distributeur (6), ayant un pourcentage en poids du support (F) supérieur à 70 %, particulièrement supérieur à 80 %, et la dispersion fertilisante (C), sortant du distributeur (6), ayant un pourcentage en poids de l'additif (A) supérieur à 2 %, particulièrement supérieur à 10 %.

7. Procédé selon l'une quelconque des revendications précédentes, le support (F) comprenant au moins un constituant compris dans le groupe des constituants suivants : le soufre, l'urée, le nitrate d'ammonium, la paraffine, la résine d'origine naturelle, la résine synthétique et l'additif (A) comprenant au moins l'un sélectionné dans le groupe des substances suivantes : l'argile, l'urée, les sulfates de sodium, le potassium, le calcium, l'ammonium, les phosphates de sodium, les carbonates de sodium, la cendre de bois, le charbon, les copeaux de bois, les masses végétales, les amidons.

8. Procédé selon l'une quelconque des revendications précédentes, l'additif (A) comprenant au moins une substance adaptée pour effectuer une fonction mécanique de désagrégation du granulé, par exemple en présence d'eau ou d'humidité, ladite substance étant adaptée pour présenter une fonction mécanique de désagrégation du granulé qui est sélectionnée dans le groupe comprenant la bentonite, l'argile, le bois ou ses dérivés, la masse végétale, l'amidon, les chaumes ou leurs combinaisons.

9. Procédé selon l'une quelconque des revendications précédentes, l'additif (A) comprenant au moins une substance micronutriment, ladite substance micronutriment étant particulièrement sélectionnée dans le groupe comprenant l'urée, les sulfates de sodium, le potassium, le calcium, l'ammonium, les phosphates de sodium, les carbonates de sodium, la cendre de bois ou leurs combinaisons, l'additif (A) comprenant éventuellement au moins une substance désinfectante telle que le charbon.

10. Procédé selon l'une quelconque des revendications précédentes, comprenant en outre les étapes suivantes :
- de chauffage du support (F) au moins avant l'étape de son insertion à l'intérieur du distributeur (6), ladite étape de chauffage étant configurée pour amener le support (F) à l'état liquide à une température comprise entre 70°C et 200°C ;
- de mise en forme des granulés par le dispositif de mise en forme de granulés (7) en distribuant la dispersion fertilisante sous la forme de gouttelettes sur au moins une courroie transporteuse (8), l'étape de formation de granulés comprenant au moins les sous-étapes d'envoi de la dispersion fertilisante (C) à l'intérieur du dispositif de mise en forme de granulés sous un état liquide ou semi-liquide, le déplacement en rotation du dispositif de mise en forme de granulés (7) et la distribution d'une quantité prédéterminée de dispersion fertilisante (C) sur la courroie transporteuse à travers une pluralité de buses de dépôt ;
- de refroidissement desdits granulés passant sur ladite courroie transporteuse (8) afin de permettre de solidifier ceux-ci au moins partiellement, l'étape de refroidissement de granulés permettant de porter ces derniers à une température inférieure à 70°C, par exemple inférieure à 50°C.

11. Procédé selon l'une quelconque des revendications précédentes, le support (F) étant sensiblement formé d'un matériau qui est présent à l'état liquide lorsqu'il est porté à une température de 200°C à la pression atmosphérique.

12. Appareil (1) de production d'un engrais sous forme de granulés comprenant :
- au moins une première ligne d'alimentation (2) configurée pour permettre à au moins un support (F) de passer, ladite première ligne d'alimentation (2) ayant au moins un orifice d'entrée (2a) pouvant être relié à une source (4) adaptée pour alimenter ledit support (F) et au moins un orifice de sortie (2b) pour son alimentation, la première ligne d'alimentation (2) étant alternativement configurée pour permettre le passage d'au moins un support (F) sous une forme liquide ou support (F) sous une forme solide ;
- au moins une seconde ligne d'alimentation (3) configurée pour permettre à au moins un additif (A) sous une forme granuleuse et/ou de poudre de passer, ladite seconde ligne d'alimentation (3) ayant au moins un orifice d'entrée (3a) pouvant être relié à une source (5) adaptée pour alimenter ledit additif (A) et au moins un orifice de sortie (3b) pour son alimentation,
- au moins un distributeur (6) ayant un premier et un second orifice d'entrée (6a ; 6b) respectivement reliés hydrauliquement aux orifices de sortie (2b ; 3b) de la première et de la seconde ligne d'alimentation (2 ; 3), lesdits premier et second orifice d'entrée permettant au distributeur de recevoir au niveau du support d'entrée (F) et l'additif (A) arrivant depuis les sources correspondantes (4 ; 5), ledit distributeur (6) comprenant au moins une extrudeuse à vis qui est configurée pour déplacer le support (F) et l'additif (A) le long d'un sens d'avancement (10) et de permettre simultanément leur mélange, le support (F) lorsqu'il se trouve sous la forme solide, étant liquéfié durant le mélange dans le distributeur (6), ledit distributeur étant en outre configuré pour mélanger le support (F) et l'additif (A) et délimiter une dispersion fertilisante (C) sous la forme liquide ou semi-liquide, ledit distributeur (6) comprenant en outre au moins un orifice de sortie (6c) adapté pour permettre l'alimentation de la dispersion fertilisante (C) sortant du distributeur (6),
et l'appareil (1) étant configuré pour alimenter continuellement le support (F) et l'additif (A) au distributeur (6), ledit distributeur (6) étant configuré pour mélanger continuellement le support (F) et l'additif (A) et simultanément au déplacement de ce dernier le long dudit sens d'avancement (10), ledit distributeur (6) étant configuré pour délimiter la dispersion fertilisante (C) pendant que le support (F) et l'additif (A) se déplacent le long de la ligne de mouvement pour permettre d'alimenter continuellement la dispersion fertilisante (C) sous une forme liquide ou semi-liquide depuis ledit distributeur (6),
- au moins un dispositif de mise en forme de granulés (7) localisé au niveau de l'orifice de sortie (6c) du distributeur (6), le dispositif de mise en forme de granulés (7) étant configuré pour recevoir continuellement la dispersion fertilisante (C) sous une forme liquide ou semi-liquide sortant du distributeur (6), et former continuellement des granulés.

13. Appareil selon la revendication précédente comprenant en outre une courroie transporteuse (8) localisée en aval du dispositif de mise en forme de granulés (7), le dispositif de mise en forme de granulés (7) comprenant un nombre prédéterminé de buses de dépôt et alimentant la dispersion fertilisante sous forme de gouttelettes sur ladite courroie transporteuse (8), la dispersion fertilisante (C) se trouvant à l'intérieur du dispositif de mise en forme de granulés sous un état liquide ou semi-liquide.

14. Appareil selon la revendication précédente, une rotation du dispositif de mise en forme de granulés (7) permettant d'alimenter une quantité prédéterminée de dispersion fertilisante (C) sur la courroie transporteuse à travers la pluralité des buses de dépôt, lesdits granulés passant sur ladite courroie transporteuse (8), étant refroidis afin de permettre de solidifier au moins partiellement ces derniers, l'étape de refroidissement des granulés permettant de les porter à une température inférieure à 70°C, par exemple inférieure à 50°C.
